Europäisches Patentamt

European Patent Office

Office européen des brevets

(19)

(11) Veröffentlichungsnummer: **0 339 133 B1**

(12) # EUROPÄISCHE PATENTSCHRIFT

(45) Veröffentlichungstag der Patentschrift: **03.06.92**

(51) Int. Cl.⁵: **B60B 17/00**, B60B 5/02, B60B 3/08

(21) Anmeldenummer: **88119661.2**

(22) Anmeldetag: **25.11.88**

(54) **Schienenrad.**

(30) Priorität: **28.04.88 DE 3814343**

(43) Veröffentlichungstag der Anmeldung:
**02.11.89 Patentblatt 89/44**

(45) Bekanntmachung des Hinweises auf die
Patenterteilung:
**03.06.92 Patentblatt 92/23**

(84) Benannte Vertragsstaaten:
**AT BE CH DE ES FR GB GR IT LI LU NL SE**

(56) Entgegenhaltungen:
**EP-A- 0 192 839**
**DE-A- 1 629 479**
**DE-U- 8 603 942**

(73) Patentinhaber: **MAN GHH Schienenverkehrstechnik GmbH
Frankenstrasse 150
W-8500 Nürnberg 44(DE)**

(72) Erfinder: **Bongers, Bernd
Nelkenweg 2
W-8011 Kirchheim(DE)**
Erfinder: **Meurer, Rene
Innstrasse 2
W-8203 Oberaudorf(DE)**
Erfinder: **Oefner, Walter
Palnkamerstrasse 22
W-8156 Otterfing(DE)**
Erfinder: **Rode, Klaus
Bahnhofstrasse 39
W-8240 Deisenhofen(DE)**
Erfinder: **Maier, Georg
Zeno-Pfest-Strasse 6
W-8254 Isen(DE)**

(74) Vertreter: **Merten, Fritz
Tristanstrasse 5
W-8500 Nürnberg 40(DE)**

## Beschreibung

Die Erfindung bezieht sich auf ein Schienenrad nach dem Oberbegriff des Patentanspruchs 1.

Bei derartigen Schienenrädern muß die die Radscheibe bildende Faserverbundstruktur trotz eines geringen Baugewichts zusätzlich zu den radialen Radaufstandslasten und den in Umfangsrichtung wirkenden Brems- und Beschleunigungskräften auch starke, parallel zur Radachse wirkende Querkräfte zwischen der Nabe und dem Radreifen übertragen und eine dementsprechend hohe Biegesteifigkeit besitzen, was bei den bekannten Scheibenrädern dieser Art (DE-A-33 45 555, EP-A-0 065 086) dadurch erreicht wird, daß die Radscheibe in Sandwichbauweise mit einem die äußeren Faserverbund-Deckschichten im Abstand zueinander schubfest verkoppelnden, spezifisch leichten Innenkern aus Metallwaben oder Schaumstoffmaterial ausgebildet ist. Ein solcher Innenkern, gleichgültig ob er aus Metallwaben oder aus einem Schaumstoff ausreichender Festigkeit besteht, erfordert jedoch einen so hohen Kostenaufwand, daß der Einsatz von Schienenrädern dieser Bauart trotz ihrer überlegenen Eigenschaften gegenüber üblichen Ganzmetall-Schienenrädern nur in beschränktem Umfang möglich ist.

Aufgabe der Erfindung ist es, ein Schienenrad der eingangs genannten Art so auszubilden, daß es eine kostengünstige, großseriengerechte Bauweise und unter Beibehalt eines geringen Eigengewichts eine hohe konstruktive Festigkeit im Bereich der Faserverbund-Radscheibe aufweist.

Die EP-A-0 065 086 zeigt bereits ein Schienenrad gemäß dem Oberbegriff des Anspruchs 1.

Diese Aufgabe wird erfindungsgemäß durch das im Patentanspruch 1 gekennzeichnete Schienenrad gelöst.

Erfindungsgemäß wird durch die im Innenkern angeordneten, radialen Faserverbund-Profile, die jeweils aus hochgradig schubsteifen, über die Profil-Seitenwände großflächig mit den Deckschichten verklebten Profilstegen bestehen, eine Radscheibe erhalten, die eine spezifisch auf die angreifenden Lasten abgestimmte, sehr hohe konstruktive Festigkeit bei geringem Baugewicht besitzt, mit der Besonderheit, daß sich die Faserverbundprofile auf fertigungstechnisch einfache Weise herstellen lassen und einen wesentlich niedrigeren Kostenaufwand erfordern als die üblicherweise für Radscheiben gleicher Festigkeit benötigten Schaumstoff- oder Wabenkerne.

Gemäß Anspruch 2 sind die Faserverbundprofile endseitig zweckmäßigerweise mit einstückigen, am Außen- bzw. Innenrand des Innenkerns in Umfangsrichtung zwischen den Deckschichten verlaufenden Verlängerungen versehen, wodurch eine gezielte, örtliche Versteifung im Bereich der radreifen- und nabenseitigen Krafteinleitungszonen der Radscheibe erzielt wird.

Eine besonders bevorzugte Ausgestaltung der Erfindung besteht nach Anspruch 3 darin, daß jeweils zwei benachbarte Faserverbundprofile einschließlich ihrer Verlängerungen als einteilige, im Querschnitt im wesentlichen kreisringsegmentförmige Hohlkassette ausgebildet sind. Durch eine solche Hohlkassetten-Faserverbundstruktur des Innenkerns wird die kontruktive Steifigkeit der Radscheibe ganz erheblich gesteigert, selbst wenn die faserverbundfreien Hohlräume des Innenkerns mit einem kostengünstigen Material relativ niedriger Festigkeit, nämlich vorzugsweise Schaumstoff, ausgefüllt sind. Um die Versteifungswirkung der Hohlkassetten weiter zu erhöhen, sind diese vorzugsweise gemäß Anspruch 4 in Umfangsrichtung des Innenkerns lückenlos nebeneinanderliegend angeordnet und miteinander verklebt. Ebenfalls aus Gründen einer Steifigkeitserhöhung und um die Klebeflächen zwischen den Hohlkassetten und den Deckschichten so groß wie möglich zu halten, sind die Profil-Seitenwände der Hohlkassetten gemäß Anspruch 5 zweckmäßigerweise jeweils mit einer in Radialrichtung des Innenkerns zunehmenden Breite sich bis zur Hohlkassetten-Mittelebene erstreckend ausgebildet.

Ein im Hinblick auf eine günstige Serienfertigung wesentlicher Aspekt der Erfindung ergibt sich aus den Ansprüchen 5-8, wonach die Hohlkassetten einschließlich ihrer Schaumstoffkerne im Wege des Wickelverfahrens in der Weise hergestellt werden, daß ein länglicher Wickeldorn, der abwechselnd aus Schaumstoff- und Distanzstücken mit einer den Innenquerschnitt der Hohlkassetten entsprechenden Querschnittskonfiguration zusammengesetzt ist, durchgehend mit Wickellaminat belegt, das Wickellaminat im Bereich der Distanzstücke zerteilt und zugeschnitten und die nach dem Entfernen der Distanzstücke freien Wickellaminat-Abschnitte als Profil-Seitenwände auf die jeweiligen Schaumstoffstücke umgeklappt werden, wodurch eine Fertigung der Hohlkassetten in großen Stückzahlen mit sehr geringem Herstellungsaufwand erzielt wird, wobei die so gebildeten Hohlkassetten im Hinblick auf eine weitere Fertigungserleichterung gemäß Anspruch 8 zweckmäßigerweise im ungehärteten Zustand zum Innenkern zusammengefügt und gemeinsam ausgehärtet sind.

Eine im Hinblick auf eine hohe Lastfestigkeit des Schienenrades besonders zweckmäßige Ausgestaltung der Erfindung betrifft die Verbindung der Faserverbund-Radscheibe mit dem Radreifen gemäß den Ansprüchen 9 - 11, wonach die Radscheibe aus Gründen einer hochgradig querkraftsicheren Verkoppelung mit dem Radreifen vorzugsweise sowohl verklebt als auch in Axialrichtung formschlüssig verbunden und zur formschlüssigen Sicherung zweckmäßigerweise ein in eine Umfangsnut des Radreifens eingreifender und mit dieser verklebter Faserverbundring vorgesehen ist, der zur Verminderung von Spannungsspitzen vorzugsweise einen abgeschäfteten Faserlagenaufbau besitzt.

Im Hinblick auf eine großseriengerechte Ausbildung, aber auch aus Gründen einer örtlichen Versteifung der Radscheibe im Bereich der radreifenseitigen Randverbindung empfiehlt es sich ferner gemäß Anspruch 12, beide Deckschichten gemeinsam als einteilig über die Außen- und beide Seitenflächen des Innenkerns sich erstreckendes Faserverbund-Wickellaminat herzustellen, welches eine die Nabe umschlingende und von dieser tangential nach außen verlaufende Faserorientierung und eine radial nach außen abnehmende Wanddikke aufweist, wobei die in der Ebene der Deckschichten wirkenden, radialen Kräfte zumindest teilweise durch die Flächenpressung zwischen Radscheibe und Radnabe übertragen werden, so daß auf teuere Verklebelaschen im Nabenbereich verzichtet werden kann. Gemäß Anspruch 13 ist das die Deckschichten bildende Faserverbund-Laminat vorzugsweise beidseitig im Umschlingungsbereich der Nabe in in dieser ausgebildete, nutartige Vertiefungen gewickelt, wodurch auf fertigunghsmäßig einfache Weise auch im Nabenbereich eine wiederum formschlüssige, axiale Sicherung auf beiden Seiten der Radscheibe erzielt wird, ohne daß eine geteilte Nabe benötigt wird.

Schließlich ist es in weiterer Ausgestaltung der Erfindung gemäß Anspruch 14 möglich, auch kegelstumpfförmig geformte Radscheiben mit einem an beiden Seitenflächen des Innenkerns einwandfrei anliegenden, deckschichtbildenden Wickellaminat zu versehen.

Ausführungsbeispiele der Erfindung werden anhand der Figuren näher erläutert. Es zeigen:

Fig. 1    Einen Halbschnitt eines Schienenrades nach der Erfindung mit einer Radscheibe in Faserverbund-Bauweise;

Fig. 2    Die Aufsicht des aus Hohlkassetten zusammengesetzten Innenkerns der Radscheibe nach Fig. 1;

Fig. 3 a - c    Die Ausbildung eines Wickellaminats zur Herstellung der Hohlkassetten;

Fig. 4 a, b    Die Querschnittsform eines Faserverbund-Sicherungsringes und das zugehörige Werkzeug;

Fig. 5    Eine kegelstumpfförmige Radscheibe, im unteren Halbschnitt zu Beginn und im oberen Halbschnitt am Ende des Deckschicht-Wickelvorgangs.

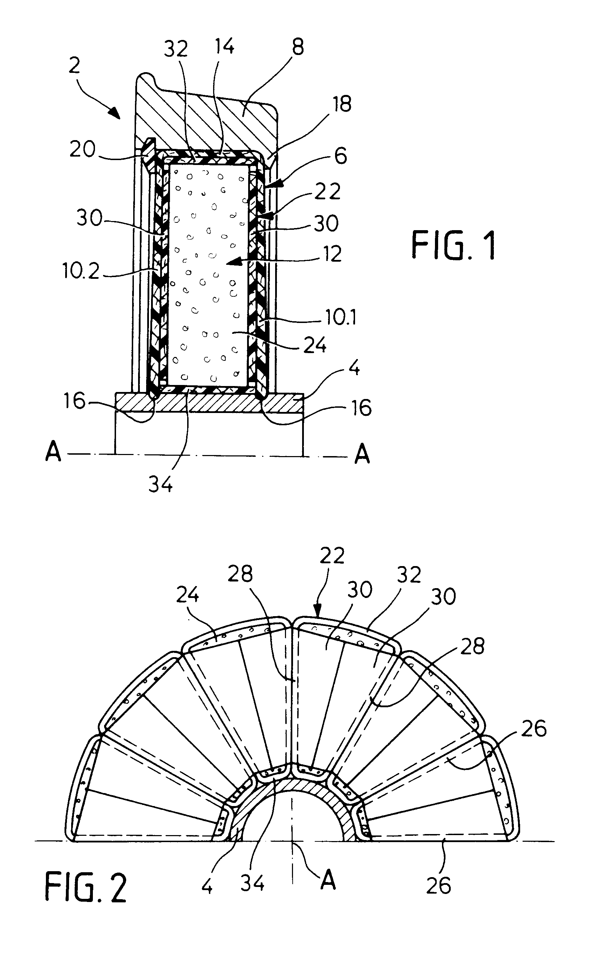

Gemäß Fig. 1 enthält das Schienenrad 2 mit der Radachse A eine metallische Radnabe 4, eine Radscheibe 6 in Faserverbund-Bauweise und einen Radreifen 8 aus Metall.

Die Radscheibe 6 besteht aus äußeren Faserverbund-Deckschichten 10.1 und 10.2 und einem zwischen diesen schubkraftübertragend angeordneten Innenkern 12. Die Deckschichten 10.1 und 10.2 werden durch ein sich einteilig über die Seitenflächen und die äußere Mantelfläche des Innenkerns 12 erstreckendes, gewickeltes Faserverbund-Laminat 14 gebildet, das auf beiden Seiten des Innenkerns 12 in als Umfangsnut ausgebildete Vertiefungen 16 der Radnabe 4 eingreift. Zur lastfesten Verkoppelung zwischen Radscheibe 6 und Radreifen 8 ist zum einen das Deckschicht-Laminat 14 mit der Innenfläche des Radreifens 8 verklebt und zum anderen eine formschlüssige Sicherung vorgesehen, die auf der einen Seite der Radscheibe 6 durch einen am Radreifen 8 angeformten Anschlagbund 18 und auf der anderen Seite durch einen aus Einbaugründen mehrteiligen Faserverbundring 20 gebildet wird, welcher in eine Umfangsnut an der Innenfläche des Radreifens 8 eingreift und in dieser verklebt ist.

Zur Versteifung der Radscheibe 6 vor allem bezüglich der an der Nabe 4 und dem Radreifen 8 parallel zur Radachse A eingeleiteten Querkräfte enthält der Innenkern 12 eine Anordnung von in Umfangsrichtung nebeneinanderliegenden, einstükkigen Hohlkassetten 22 aus Faserverbund-Werkstoff, die jeweils einen kreisringsegmentförmigen Querschnitt besitzen und im Innenraum mit einer Schaumstoffüllung 24, z. B. aus Polyurethan-Schaum versehen sind.

Wie die Fig. 1, 2 und 3c zeigen, besteht jede Hohlkassette 22 aus zwei, radial zur Radachse A von der Radnabe 4 zum Radreifen 8 verlaufenden Faserverbund-Profilen 26, die jeweils einen senkrecht zu den Deckschichten 10 ausgerichteten Profilsteg 28 und an die oberen und unteren Steg-Längsränder einteilig angeformte, mit der Innenseite der Deckschichten 10 flächig verklebte Profil-Seitenwände 30 enthalten. Durch endseitige, sich in Umfangsrichtung erstreckende Steg-Verlängerungen 32 und 34, die den radreifen- bzw. nabenseitigen Randabschluß der Hohlkassette 22 bilden, sind die beiden Faserverbundprofile 26 mit durchlaufender Faserstruktur einstückig miteinander verbunden. Die Profilseitenwände 30 besitzen eine in Radialrichtung zunehmende Breite und reichen jeweils bis zur Mittelebene der Hohlkassette 22, so daß der schaumstoffgefüllte Kassetten-Innenraum nahezu vollständig von den Faserverbund-Profilen 26 umschlossen wird. Die Faserverbundprofile 26 besitzen eine einheitliche Faserstruktur mit einer gerichteten, bezüglich der Längsrichtung der Stege 28 unter ± 45° geneigten Faserorientierung, wobei jedoch ein geringer Faseranteil der Hohlkassetten 22, nämlich nicht mehr als etwa 20 %, zur Erhöhung der radialen Festigkeit der Profilwände einen Faserverlauf in Steg-Längsrichtung, also in Umfangsrichtung der Kassette 22, und/oder zur Erzielung bestimmter Laminat-Qualitäten eine zur Steg-Längsrichtung im wesentlichen senkrechte Faserorientierung aufweisen kann.

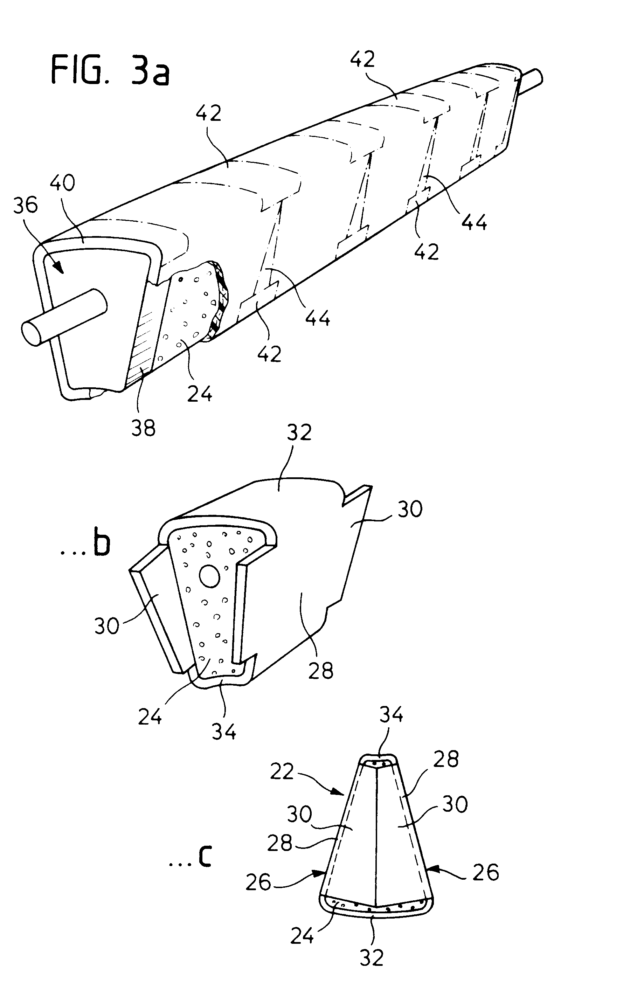

Die Herstellung der Hohlkassetten 22 einschließlich der Schaumstoff-Füllstücke 24 erfolgt auf großseriengerechte Weise gemäß Fig. 3 im Wege des Wickelverfahrens mit Hilfe eines Wickeldorns 36, der aus einer Vielzahl von vorgefertigten Schaumstoff-Füllstücken 24 und zwischen diesen in abwechselnder Reihenfolge angeordneten Distanzstücken 38 zusammengesetzt ist, welche die gleiche Querschnittsform wie die Schaumstoffteile 24 aufweisen und deren Länge jeweils doppelt so groß wie die Breite der Profil-Seitenwände 30 ist. Der Wickeldorn 36 wird durchgehend mit einem Wickellaminat 40 bewickelt, das eine sich kreuzende, zur Dorn-Längsachse unter ± 45° geneigte Faserorientierung besitzt, wobei geringe Faseranteile aus den oben erwähnten Gründen in Umfangsrichtung des Wickeldorns 36 oder mit einem möglichst kleinen Steigungswinkel von 5 bis 15° zur Dorn-Längsachse gewickelt sein können.

Nach dem Bewickeln des Dorns 36 bis zu einer der Dicke der Kassettenwände entsprechenden Laminatdicke wird das Wickellaminat 40 im Bereich der Distanzstücke 38 mittels einer Schneid- und Stanzvorrichtung (nicht gezeigt) längs des in Fig. 3a strichpunktiert dargestellten Zuschnitts durchtrennt, wobei auf der Ober- und Unterseite des Dorns 36 rechteckige und zwischen diesen an den Schmalseiten des Dorns 36 jeweils zwickelförmige Laminat-Abfallstücke 42 bzw. 44 entstehen. Zur Erleichterung des Stanz- und Schneidvorgangs sind die Distanzstücke 38 im Bereich der Laminatschnitte mit Nuten oder Streifen aus einem elastomeren Werkstoff versehen. Nach dem Zuschnitt werden die Schaumstoffstücke 24 und die Distanzstücke 38 in abwechselnder Reihenfolge vom Wickeldorn 36 abgezogen, derart, daß das Laminat zwischen den einzelnen Zuschniten jeweils auf dem von ihm umhüllten Schaumstoffstück 24 verbleibt (Fig. 3b). Die aufgrund des Schnittmusters über das Schaumstoffstück 24 vorstehenden, laschenförmigen Wickellaminat-Abschnitte werden anschließend umgeklappt und bilden die auf dem Schaumstoffstück 24 aufliegenden Profil-Seitenwände 30 (Fig. 3c).

Die Kassettten 22 werden in der in Fig. 2 gezeigten Anordnung im nicht-ausgehärteten Zustand in einem Formwerkzeug, zusammengefügt, in das auch die Nabe 4 integriert sein kann, und anschließend gemeinsam unter gegenseitiger Verklebung ihrer aneinanderliegenden Profilstege 28 zum fertigen Innenkern 12 ausgehärtet.

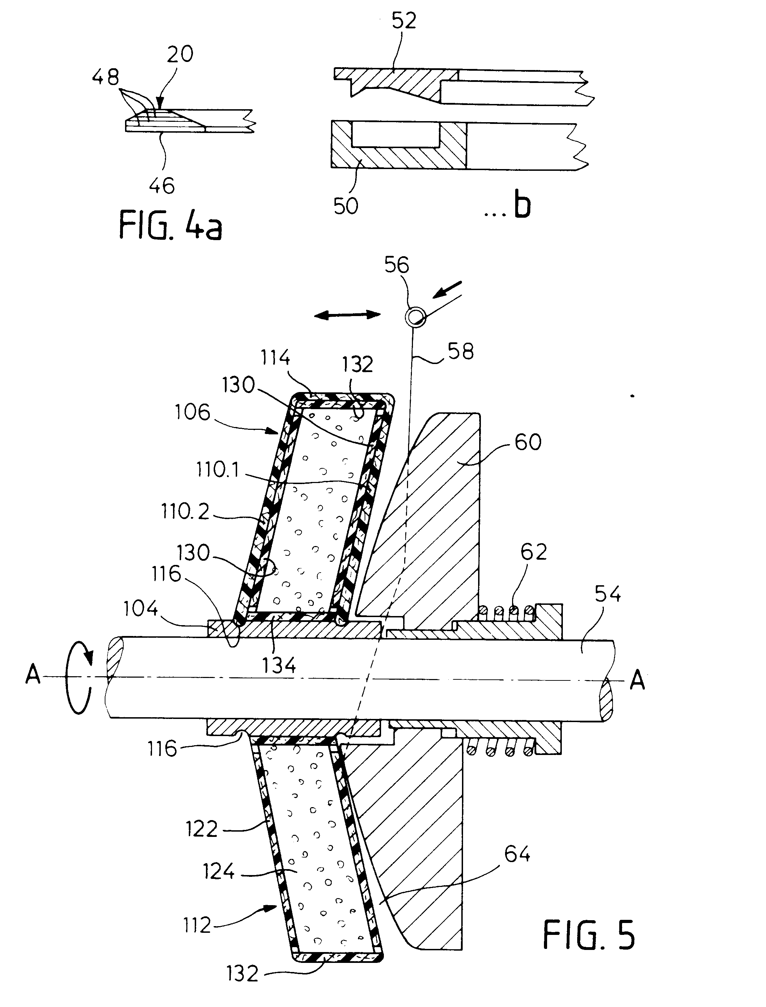

Fig. 4 veranschaulicht die Herstellung des im Querschnitt abgeschäfteten Faserverbund-Sicherungsrings 20 mit einer zur Ring-Seitenfläche 46 parallelen Laminatschichtung 48 (Fig. 4a). Die Herstellung erfolgt in einem in Fig. 4b im Querschnitt gezeigten, ringförmigen Einlegwerkzeug 50 mit zugehörigem Preßstempel 52, in welches Faserverbund-Prepreg-Bänder oder -Schläuche mit einer ± 45°-Faserorientierung bezüglich der Band-Längsrichtung eingelegt und nach dem Schließen des Preßstempels 52 ausgehärtet werden. Nach dem Durchtrennen des in Umfangsrichtung zunächst noch geschlossenen Sicherungsringes 20 ist dieser einbaufertig.

Das Umwickeln des Innenkerns 12 mit dem DeckschichtLaminat 14 wird gemäß Fig. 5 anhand eines Ausführungsbeispiels erläutert, bei dem der Innenkern einen trapezförmigen Querschnitt aufweist, also die Radscheibe für ein Schienenrad mit einem gegenüber der Nabe axial versetzten Radreifen kegelstumpfförmig ausgebildet ist. Die dem ersten Ausführungsbeispiel entsprechenden Bauteile sind durch ein um 100 erhöhtes Bezugzeichen gekennzeichnet. Der Innenkern 112 wird im wesentlichen in gleicher Weise wie der Innenkern 12 hergestellt, abgesehen davon, daß der in Fig. 3a gezeigte Wickellaminat-Zuschnitt sowie die Trennflächen zwischen den Schaumstoff- und Distanzstücken des Wickeldorns geändert werden und die Hohlkassetten 122 in einem der Trapezform des Innenkerns 112 entsprechenden Formwerkzeug positioniert und gemeinsam ausgehärtet werden müssen.

Nachdem der Innenkern 112 mit der Nabe 104 zwischen den Umfangsnuten 116 verklebt ist, wird er gemeinsam mit dieser auf einem Dorn 54 befestigt und kontinuierlich mit einem durch ein Fadenauge 56 laufenden Verstärkungsfaden 58 in Form eines harzgetränkten Faserverbund-Rovings mit dem Deckschicht-Laminat 114 bewickelt. Das Fadenauge 56 ist kinematisch so gesteuert, daß der Endlosfaden 58 mit einem veränderlich vorwählbaren Umschlingungswinkel in den Umfangsnuten 116 abgelegt wird, wobei die Wickelebene nach jeder Fadenumschlingung zyklisch gewechselt wird, so daß der Endlosfaden 58 vom Umschlingungsbereich auf der einen Seite des Innenkerns 112 radial nach außen und über die äußere Mantelfläche des Innenkerns 112 und von dort ebenfalls wiederum tangential zur Nabe 104 nach innen zum Umschlingungsbereich auf der anderen Seite des Innenkerns 112 verläuft. Wenn der Innenkern 112 auf diese Weise gleichförmig und in der erwünschten Dicke mit dem Deckschicht-Laminat 114 bewickelt ist, wird nach dem Aushärten des Deckschicht-Laminats 114 der Radreifen 8 montiert und das Schienenrad ist fertiggestellt.

Anders als bei dem im Querschnitt rechteckigen Innenkern 12 des ersten Ausführungsbeispiels wird bei der in Fig. 5 gezeigten, kegelstumpfförmigen Radscheibe 106 eigens durch eine zusätzliche Maßnahme sichergestellt, daß sich der Endlosfaden 58 an die im nabenseitigen gegenüber dem radreifenseitigen Randbereich zurückversetzte Seitenfläche des Innenkerns 112, also die im Sinne der Fig. 5 rechte Innenkern-Seitenfläche, ordnungsgemäß anlegt. Zu diesem Zweck ist auf dem Dorn 54 ein Rutschkegel 60 angeordnet, der durch eine Druckfeder 62 axial in Richtung auf den Innenkern 112 gedrückt wird und gemeinsam mit der zurückversetzten Innenkern-Seitenfläche einen rotationssymmetrisch zur Nabe 104 hin V-förmig enger werdenden Wickelspalt 64 begrenzt, durch den erreicht wird, daß der Endlosfaden 58 und somit das Deckschicht-Laminat 114 auch auf der zurückversetzten Innenkern-Seitenfläche, also im Bereich der Deckschicht 110.1, mit einwandfreier, an den Profil-Seitenwänden 130 lückenlos anliegender Faserstruktur abgelegt wird. Mit zunehmender Wanddikke des Deckschicht-Laminats 114 im Bereich der Nabe 104 schiebt sich der Rutschkegel 60 entgegen der Federkraft axial zurück, so daß der Wickelspalt 64 während des gesamten Wickelvorgangs eine gleichförmig gute Fadenführungswirkung beibehält.

**Patentansprüche**

1. Schienenrad (2) mit einer Radnabe (4), einem Radreifen (8) und einer die Radnabe und den Radreifen verbindenden, biegesteifen Radscheibe (6) in Faserverbund-Bauweise aus zwei äußeren Faserverbund-Deckschichten (10.1, 10.2) und einem spezifisch leichten, zwischen den Deckschichten schubübertragend angeordneten Innen-, insbesondere Schaumstoffkern (12),
dadurch **gekennzeichnet**, daß
im Innenkern (12) schubfeste, sich jeweils radial zwischen Radnabe (4) und Radreifen (8) erstreckende Faserverbund-Profile (26) mit senkrecht zu den Deckschichten (10) verlaufenden Profilstegen (28) und an den Steg-Längsrändern mit durchlaufender Faserstruktur einstückig angeformten, jeweils mit den Deckschichten kraftübertragend verkoppelten Profil-Seitenwänden (30), die als freie Schenkel der Profile (26) in eine Lage parallel zu den Deckschichten (10) angeordnet sind, mit einer sich kreuzenden, zur Profil-Längsrichtung schräg geneigten Faserorientierung angeordnet sind.

2. Schienenrad nach Anspruch 1,
dadurch **gekennzeichnet**, daß
die Faserverbund-Profile (26) endseitig an den Profilstegen (28) mit einstückigen, den Innenkern (12) am radial Außen- bzw. Innenrand begrenzenden Steg-Verlängerungen (32, 34) versehen sind.

3. Schienenrad nach Anspruch 2,
dadurch **gekennzeichnet**, daß
jeweils zwei, in Umfangsrichtung des Innenkerns (12) benachbarte Faserverbund-Profile (26) einschließlich ihrer Steg-Verlängerungen (32, 34) miteinander zu einer einteiligen, im Querschnitt im wesentlichen ringsegmentförmigen Hohlkassette (22) verbunden sind.

4. Schienenrad nach Anspruch 3,
dadurch **gekennzeichnet**, daß
die Hohlkassetten (22) in Umfangsrichtung des Innenkerns (12) lückenlos nebeneinanderliegend angeordnet und miteinander verklebt sind.

5. Schienenrad nach Anspruch 3 oder 4,
dadurch **gekennzeichnet**, daß die
Profil-Seitenwände (30) der Hohlkassetten (22) mit einer in Radialrichtung des Innenkerns (12) zunehmenden Breite sich jeweils bis zur HohlkassettenMittelebene erstreckend ausgebildet sind.

6. Schienenrad nach einem der Ansprüche 3 - 5,
dadurch **gekennzeichnet**, daß
die Hohlkassetten (22) im Wickelverfahren mit einer Schaumstoffüllung (24) als Wickelkern hergestellt sind.

7. Schienenrad nach Anspruch 6,
dadurch **gekennzeichnet**, daß
mehrere Hohlkassetten (22) gemeinsam auf einem länglichen, abwechselnd aus Schaumstoff-Wickelkernen (24) mit jeweils einer der Kassettenhöhe entsprechenden Teillänge und zwischen diesen angeordneten Distanzstücken (38) zusammengesetzten, durchgehend mit Wickellaminat (40) belegten Wickeldorn (36) hergestellt sind, wobei das Wickellaminat im Bereich der Distanzstücke zerteilt und die nach dem Entfernen der Distanzstücke freien Wickellaminat-Abschnitte als Profil-Seitenwände (30) auf die jeweiligen Schaumstoff-Wickelkernteile umgeklappt sind.

8. Schienenrad nach einem der Ansprüche 3 - 7,
dadurch **gekennzeichnet**, daß
die Hohlkassetten (22) des Innenkerns (12) im ungehärteten Zustand zusammengefügt und gemeinsam ausgehärtet sind.

9. Schienenrad nach einem der vorhergehenden Ansprüche, mit einem von der Radscheibe getrennt hergestellten Radreifen,
dadurch **gekennzeichnet**, daß
der Innenkern (12) und die Deckschichten (10) mit der Radreifen-Innenfläche verklebt und an dieser in Axialrichtung formschlüssig gesichert sind.

10. Schienenrad nach Anspruch 9,
dadurch **gekennzeichnet**, daß
zur formschlüssigen Sicherung ein mehrteiliger, in eine Umfangsnut des Radreifens (8) eingreifender und mit dieser verklebter Faserverbundring (20) mit einer ± 45°-Faserorientierung vorgesehen ist.

11. Schienenrad nach Anspruch 10,
dadurch **gekennzeichnet**, daß
der Faserverbundring (20) einen zum Innenumfang hin abgeschäfteten Faserlagenaufbau (48) aufweist.

12. Schienenrad nach einem der vorhergehenden Ansprüche,
dadurch **gekennzeichnet**, daß
die Deckschichten (10) einteilig als durchgehend über beide Seiten- und die Außenfläche des Innenkerns (12) gewickeltes Faserverbund-Laminat (14) mit einer die Nabe (4) umschlingenden und von dieser tangential nach außen verlaufenden Faserorientierung ausgebildet sind.

13. Schienenrad nach Anspruch 12,
dadurch **gekennzeichnet**, daß
das die Deckschichten (10) bildende Faserverbund-Laminat (14) zur formschlüssigen, axialen Verankerung beidseitig des Innenkerns (12) im Umschlingungsbereich der Nabe (4) in in dieser nutartig ausgebildete Vertiefungen (16) gewickelt ist.

14. Schienenrad nach einem der vorhergehenden Ansprüche, mit einem gegenüber der Nabe axial versetzten Radreifen und einem kegelstumpfförmigen Innenkern,
dadurch **gekennzeichnet**, daß
die in nabenseitigen gegenüber dem radreifenseitigen Randbereich zurückversetzte Deckschicht (110.1) mit Hilfe eines axial in Richtung auf den Innenkern (112) federbelasteten, gemeinsam mit diesem einen rotationssymmetrisch zur Nabe (104) hin V-förmig sich verengenden Wickelspalt (64) begrenzenden Rutschkegels (60) gewickelt ist.

**Claims**

1. A rail wheel (2) having a wheel hub (4), a wheel rim (8) and a flexurally stiff wheel disc (6), connecting the wheel hub and the wheel rim, in a composite-fibre type construction consisting of two outer composite-fibre surface layers (10.1, 10.2) and a specifically light inner core (12), in particular of foam material arranged in a tractive force-transmitting manner between the surface layers, characterised in that arranged in the inner core (12) are shear-resistant composite fibre profiles (26), respectively extending radially between the wheel hub (4) and the wheel rim (8), with profile webs (28) extending perpendicular to the surface layers (10) and, arranged at the web longitudinal edges, profile side walls (30) which are integrally formed in one piece with a continuous fibre structure and which are respectively coupled in a force-transmitting manner with the surface layers and which are arranged as free limbs of the profiles (26) in a position parallel to the surface layers (10), with a mutually intersecting fibre orientation inclined obliquely to the profile longitudinal direction,

2. A rail wheel according to claim 1, characterised in that the composite-fibre profiles (26) are provided at the end on the profile webs (28) with one-piece web extensions (32, 34) which bound the inner core (12) at the radially outer or respectively inner edge.

3. A rail wheel according to claim 2, characterised in that respectively two composite-fibre profiles (26), adjacent in the circumferential direction of the inner core (12), including their web extensions (32, 34) are connected to one another to form a one-part hollow coffer (22) which is substantially ring-segment-shaped in cross-section.

4. A rail wheel according to claim 3, characterised in that the hollow coffers (22) are arranged lying side-by-side in a gapless manner in the circumferential direction of the inner core (12) and are bonded with one another.

5. A rail wheel according to claim 3 or 4, characterised in that the profile side walls (30) of the hollow coffers (22) are designed with a width increasing in the radial direction of the inner core (12) so as to extend as far as the respective hollow-coffer central plane.

6. A rail wheel according to one of claims 3 to 5, characterised in that the hollow coffers (22) are produced in a winding process with a foam-material filling (24) as winding core.

7. A rail wheel according to claim 6, characterised in that several hollow coffers (22) are produced jointly on an elongate winding mandrel (36) which is composed alternately of foam-material winding cores (24) with respectively a partial length corresponding to the coffer height and distance pieces (38) arranged between these and which is continuously coated with winding laminate (40), in which respect the winding laminate is divided in the region of the distance pieces and the winding-laminate portions which are free after the removal of the distance pieces are folded over as profile side walls (30) onto the respective foam-material winding-core parts.

8. A rail wheel according to one of claims 3 to 7, characterised in that the hollow coffers (22) of the inner core (12) are joined together in the unhardened state and are jointly hardened.

9. A rail wheel according to one of the preceding claims, with a wheel rim produced separately from the wheel disc, characterised in that the inner core (12) and the surface layers (10) are bonded with the wheel rime inner surface and are secured on this in a formOlocking manner in the axial direction.

10. A rail wheel according to claim 9, characterised in that provided for the form-locking securing as a multipart composite fibre ring (20), with a +/-45° fibre orientation, which engages into a circumferential groove of the wheel rim (8) and which is bonded with this.

11. A rail wheel according to claim 10, characterised in that the composite fibre ring (20) has a fibre layer structure (48) which is spliced-off towards the inner circumference.

12. A rail wheel according to one of the preceding claims, characterised in that the surface layers (10) are designed in one piece as a composite-fibre laminate (14), wound continuously over both side surfaces and the outer surface of the inner core (12), with a fibre orientation which loops around the hub (4) and which extends tangentially outwards from this.

13. A rail wheel according to claim 12, characterised in that the composite-fibre laminate (14) forming the surface layers (10) for the form-locking axial anchorage on both sides of the inner core (12) in the looping region of the hub (4) is wound in depressions (16) formed in a groove-like manner in this.

14. A roll wheel according to one of the preceding claims, with a wheel rim offset axially relative to the hub and a frustoconical inner core, characterised in that the surface layer (110.1) which is set back in the hub-sided edge region relative to the wheel-tyre-sides edge region is wound with the aid of a slip cone (60) which is spring-loaded axially in the direction of the inner core (112) and which bounds jointly with this a winding gap (64) which narrows in a V-shaped manner rotationally symmetrically towards the hub (104).

**Revendications**

1. Roue (2) pour véhicules sur rails comportant un moyeu (4), un bandage (3) et un disque (6) résistant à la flexion, qui relie le moyeu et le bandage de roue et présente une structure composite renforcée par fibres composée de deux couches de revêtement extérieures (10.1, 10.2) en matériau composite renforcé par fibres et un noyau intérieur, en particulier un noyau en produit alvéolaire (12) à faible poids spécifique disposé entre les couches de revêtement de manière à transmettre les efforts de cisaillement, caractérisée en ce que des profilés (26) en matériau composite renforcé par fibres qui résistent au cisaillement, s'étendent radialement entre la moyeu de roue (4) et le bandage de roue (8) et présentent des âmes (28) s'étendant perpendiculairement aux couches de revêtement (10) ainsi que des parois latérales (30) qui sont formées d'une seule pièce sur les bords longitudinaux des âmes avec une structure de fibres continue, sont accouplées chacune avec les couches de revêtement pour la transmission des forces et qui sont disposées en tant qu'ailes libres des profilés (26) parallèlement aux couches de revêtement (10), sont disposés dans le noyau intérieur (12) avec une orientation des fibres croisée inclinée par rapport à la direction longitudinale du profilé.

2. Roue pour véhicules sur rails selon la revendication 1, caractérisée en ce que les profilés (26) en matériau composite renforcé par fibres sont munis au niveau de l'extrémité des âmes (28) de prolongements d'âmes (32, 34) d'une seule pièce limitant le noyau intérieur (12) sur le bord radialement extérieur et intérieur.

3. Roue pour véhicules sur rails selon la revendication 2, caractérisée en ce que deux profilés (26) en matériau composite renforcé par fibres voisins dans la direction circonférentielle du noyau intérieur (12), y compris leurs prolongements d'âmes (32, 34), sont réliés entre eux pour former un caisson creux (22) monobloc de section transversale essentiellement en forme de segment d'anneau.

4. Roue pour véhicule sur rails selon la revendication 3, caractérisée en ce que les caissons creux (22) sont disposés dans la direction circonférentielle du noyau intérieur (12) les uns à côté des autres sans vides et sont collés les uns avec les autres.

5. Roue pour véhicule sur rails selon la revendication 3 ou 4, caractérisée en ce que les parois latérales (30) des caissons creux (22) ont une largeur qui croît dans la direction radiale du noyau intérieur (12) jusqu'au plan médian du caisson creux.

6. Roue pour véhicule sur rail selon l'une des revendications 3 à 5, caractérisée en ce que les caissons creux (22) sont fabriqués selon un procédé de bobinage avec un produit alvéolaire de remplissage (24) constituant le noyau d'enroulement.

7. Roue pour véhicule sur rails selon la revendication 6, caractérisée en ce que plusieurs caissons creux (22) sont fabriqués ensemble sur un mandrin de bobinage (36) allongé, garni sur toute sa longueur d'un produit laminé bobiné (40) et composé alternativement de noyaux de bobinage en produit alvéolaire (24) présentant chacun une longueur correspondant à la hauteur des caissons et de pièces d'écartement (38) disposées entre ces noyaux de bobinage, le produit de laminage bobiné étant détaché dans le zone des pièces d'écartement et les parties du produit laminé bobiné libres après enlèvement des pièces d'écartement étant rabattues sur les noyaux de bobinage en produit alvéolaire concernés pour former les parois latérales de profilés (30).

8. Roue pour véhicule sur rails selon l'une des revendications 3 à 7, caractérisée en ce que les caissons creux (22) du noyau intérieur (12) sont assemblés non durcis et sont durcis ensemble.

9. Roue pour véhicule sur rails selon l'une des revendications précédentes comprenant un bandage fabriqué séparément du disque de roue, caractérisée en ce que le noyau intérieur (12) et les couches de revêtement (10) sont collés sur la surface intérieure du bandage de roue et sont bloqués par obstacle sur ce dernier en direction axiale.

10. Roue pour véhicule sur rail selon la revendication 9, caractérisée en ce que pour le blocage par obstacle, il est prévu une bague en matériau composite renforcé par fibres (20) en plusieurs parties qui s'engage dans une gorge circonférentielle du bandage de roue (8), collée sur ce dernier et qui présente une orientation des fibres de +/- 45°.

11. Roue pour véhicule sur rails selon la revendication 10, caractérisée en ce que la bague en matériau composite renforcé par fibres (20) présente une structure de couches de fibres (48) qui va en pointe en direction du diamètre intérieur.

12. Roue pour véhicule sur rails selon l'une des revendications précédentes, caractérisée en ce que les couches de revêtement (10) sont réalisées d'une pièce sous forme d'un produit laminé (14) en matériau composite renforcé par fibres bobiné en continu sur les deux surfaces latérales et la surface extérieure du noyau intérieur (12) avec une orientation de fibres entourant le moyeu (4) et s'étendant à partir de ce dernier tangentiellement vers l'extérieur.

13. Roue pour véhicule sur rails selon la revendication 12, caractérisée en ce que pour réaliser un ancrage axial par complémentarité de formes, le produit laminé en matériau composite renforcé par fibres (14) formant les couches de revêtement (10) est enroulé de part et d'autre du noyau intérieur (12) dans la zone de bobinage du moyeu (4), dans des creux (16) réalisés en forme de gorges dans ce dernier.

14. Roue pour véhicule sur rails selon l'une des revendications précédentes comprenant un bandage de roue décalé axialement par rapport au moyeu et un noyau intérieur de forme tronconique, caractérisée en ce que la couche de revêtement (110.1) en retrait dans la région du bord côté moyeu par rapport à la zone marginale côté bandage est bobinée à l'aide d'un cône de glissement (60) sollicité par ressort axialement en direction du noyau intérieur (112) et délimitant avec ce dernier une fente de bobinage (64) qui se rétrécit en V en direction du moyeu (104) avec symétrie de révolution.

FIG. 1

FIG. 2

# FIG. 3a

FIG. 4a

...b

FIG. 5